# EUROPEAN PATENT APPLICATION

(11) **EP 1 707 600 A1**
(43) Date of publication of application: **04.10.2006**
(21) Application number: 05006978.0
(22) Date of filing: 31.03.2005
(51) Int. Cl.: C09D 5/00, C09D 175/16

(54) **Aqueous radiation-curable binder composition**

(71) Applicant: Cytec Surface Specialties Austria GmbH, 8402 Werndorf (AT)
(72) Inventor: The designation of the inventor has not yet been filed
(74) Representative: Deckers, Hellmuth Alexander

(57) **Abstract**

A coating composition wherein the binder comprises a mixture of mass fractions of
from 60 % to 94 % of an aqueous dispersion of a UV curable purely aliphatic polyurethane A based on an aliphatic polyester A1 of low molar mass (M_{w} between 400 g/mol and 1 kg/mol), a cycloaliphatic diisocyanate A2, a hydroxy alkanoic acid A3, and a mixture of a diol A4 and a partial ester A5 of a olefinically unsaturated carboxylic acid A51 and a polyolA52 having at least one free hydroxyl group per molecule, and
from 6 % to 39 % of an olefinically unsaturated urethane component B having a specific content of olefinic double bonds of from 1.5 mol/kg to 3.5 mol/kg

## Description

The present invention relates to an aqueous radiation-curable binder composition which is especially useful in coil coating.

Aqueous paint binders are preferred due to environmental considerations over solvent-borne binders for paints. However, the presence of low molar mass curing agents still presents a problem regarding occupational safety and health. For this reason, radiation curable systems have found wide acceptance because they can be cured by irradiation with UV light or other high energy radiation rather than by addition of reactive chemicals like isocyanates or peroxides.

In coil coating, a metal surface is first pretreated to clean the surface from any impurities or deposits, especially from fats and oils used during processing. A primer layer is then applied to the clean metal surface, which is conventionally from about 10 µm to about 25 µm in thickness. A further coating, the topcoat, is then applied, having a dry layer thickness of from about 25 µm to about 35 µm.

Especially in the field of coil coating, radiation curable systems have found acceptance because the coating step is easily integrated into the production sequence. When continuous coating of virtually infinite length of substrates is performed, it is essential that no clogging or deposit formation of the coating agent occurs because otherwise the system must be halted, and the coating die cleaned which means interruption of a continuous process.

Recently, coil coatings comprising an additional layer have been introducedwhich additional layer has been added on top of this topcoat layer in coil coating, imparting higher gloss and improved abrasion resistance to the topcoat. This additional layer has a thickness of about 5 µm, and is preferably cured by UV irradiation.

In the UV curable aqueous coating agents used today, clogging still occurs at a frequency which is not tolerable for high speed continuous coating especially in thin layer applications such as this.

It is the object of the present invention, therefore, to provide a radiation curable coating composition with reduced propensity to clogging.

This object has been achieved by providing a mixture of at least two aqueous radiation-curable binders.

The invention therefore relates to a coating composition wherein the binder comprises a mixture of mass fractions of
from 60 % to 94 % of an aqueous dispersion of a UV curable purely aliphatic polyurethane A based on an aliphatic polyester of low molar mass (weight average molar mass M_{w} between 400 g/mol and 1000 g/mol, preferably between 500 g/mol and 900 g/mol, and particularly preferred, between 650 g/mol and 750 g/mol), a cycloaliphatic diisocyanate, hydroxy alkanoic acid, and a mixture of diol and partial (meth)acrylic ester of a polyolwhich is fully reacted and then dispersed in water to form a dispersion with a mass fraction of solids of 35 %, and
from 6 % to 39 % of an olefinically unsaturated urethane component B having a specific content of olefinic double bonds of from 1.5 to 3.5 mol/kg.

The coating composition may also additionally comprise the usual ingredients, such as photoinitiators, defoamers, wetting agents, and levelling agents.

The invention also relates to a method of preparation of the binder mixture, by mixing the aqueous dispersion of component A to an aqueous dispersion of component B, or by mixing the aqueous dispersion of component B to an aqueous dispersion of component A where the amounts of the aqueous dispersions are chosen in a way that the mass fractions stated supra which relate to solid resin are realised.

The invention further relates to a process for the application of the binder mixture to a metal surface, comprising feeding a metal coil which has been provided with a primer and a topcoat layer following pre-treatment to a coating apparatus, coating the said coil with a coating composition comprising the binder mixture, via a roll coater or other appropriate means, flashing of the major part of the water, preferably for up to 10 minutes, at slightly elevated temperature which is preferably from 30 °C to 70 °C, especially preferred from 40 °C to 60 °C, and subjecting the coated metal surface to irradiation with high energy radiation, preferably UV radiation.

Component A is made by reaction of a hydroxy functional aliphatic polyesterAl with a stoichiometric excess of cycloaliphatic diisocyanate A2 of from 1.7 mol/mol to 2.2 mol/mol, based on the amounts of substance of isocyanate groups to hydroxyl groups of the polyester. This isocyanate-functional compound is then reacted with a hydroxyalkanoic acid A3 having at least one, preferably two, hydroxyl groups, and at least one, preferably not more than one, carboxyl group which is reactive towards isocyanate groups by at least one order of magnitude lower in the rate constant than its hydroxyl groups, and then, with a mixture of a dihydric alcohol A4 having from 2 to 20 carbon atoms, where also oligomers of ethylene glycol and propylene glycol are included, up to the number of carbon atoms stated, and partial esters A5 of polyhydric alcohols with (meth)acrylic acid, where an average of from 0.7 to 1.5 hydroxyl groups remains in the molecule. The reaction is pursued until the mass fraction of isocyanate groups in the reaction mixture has fallen below the analytically detectable limit of 0.1 %, thereafter the reaction mass is dispersed in water.

The aliphatic polyester A1 is preferably derived from aliphatic linear, branched or cyclic dicarboxylic acids A11 and aliphatic linear, branched or cyclic dihydric alcohols A12. It is also possible to use a minor amount, i. e. less than 10 % of the amount of substance of A11 or A12 or both, of trifunctional or higher polyfunctional compounds. In this case, it is also preferred to use a minor amount, i. e. less than 10 % of the amount of substance of A11 or A12 or both, of monofunctional compounds, viz. monoalcohols and monocarboxylic acids. Especially preferred are polyesters derived from linear acidsA11, and from branched alcohols A12. Particularly, polyesters derived from acids having from 4 to 8 carbon atoms and from.alcohols having from 3 to 9 carbon atoms such as poly neopentylglycol adipate, poly 1,2-propanediol succinate, and poly 2,2,4-trimethyl hexandiol glutarate are preferred.

The cycloaliphatic diisocyanatesA2 are preferably 1,2-diisocyanato cyclohexane, isophorone diisocyanate, and bis-(4-isocyanatocyclohexyl)-methane.

The hydroxyalkanoic acid A3 has at least one, preferably two, hydroxyl groups, and at least one, preferably not more than one, carboxyl group which is reactive towards isocyanate groups by at least one order of magnitude lower in the rate constant than its hydroxyl groups. Examples of such acids are dimethylol propionic acid, dimethylol acetic acid, and dimethylol butanoic acid, tartaric acid, malic acid, glycolic acid, and N,N-bis-(2-hydroxyethyl)-glycine. Especially preferred is dimethylol propionic acid.

The dihydric alcohols A4 having from 2 to 20 carbon atoms are selected from the group consisting of ethylene glycol, 1,2- and 1,3-propane diol, 1,4-butane diol, neopentyl glycol, 1,6-hexane diol, where also oligomers of ethylene glycol and propylene glycol such as 3-oxapentane diol (diethylene glycol), 3,6-dioxaoctane diol are included, up to the number of carbon atoms stated.

The partial esters A5 of polyhydric alcohols with (meth)acrylic acid, where an average of from 0.7 to 1.5 hydroxyl groups remains in the molecule, are selected from the group consisting of hydroxyethyl acrylate and hydroxyethyl methacrylate, 4-hydroxybutyl (meth)acrylate, 1-methyl-2-hydroxyethyl acrylate and 1-methyl-2-hydroxyethyl methacrylate, 2-hydroxypropyl acrylate and 2-hydroxypropyl methacrylate, glycerol di(meth)acrylate, trimethylolpropane di(meth)acrylate, erythritol and pentaerythritol tri(meth)acrylate, and mixtures of these.

The content of olefinic unsaturation in the binder A is preferably from 0.05 mol/kg to 5 mol/kg, particularly preferred from 0.1 mol/kg to 2.5 mol/kg, and especially, from 0.5 mol/kg to 3 mol/kg, expressed as the ratio of the amount of substance of > C=C < double bonds to the mass of the (undiluted) resin.

Component B is a reaction product of a compound B1 formed from a hydroxyalkanoic B11 acid having at least two hydroxyl groups per molecule and at least one acid group per molecule, with an olefinically unsaturated isocyanate B12 having from 0.8 to 1.2, preferably from 0.9 to 1.1, and especially preferredfrom 0.95 to 1.05 isocyanate groups per molecule, and at least one urethane group per molecule, and a further isocyanate B2 having from 0.8 to 1.2, preferably from 0.9 to 1.1, and especially preferred from 0.95 to 1.05 isocyanate groups per molecule which is in turn the reaction product of a cycloaliphatic or aliphatic linear or branched diisocyanate B21 having from 4 to 12 carbon atoms per molecule, and a hydroxyl group containing compound B22 selected from the group consisting of saturated aliphatic linear or branched, alcohols B221 having from 6 to 14 carbon atoms and olefinically unsaturated alcohols B222 selected from the group consisting of esters B2221 of olefinically unsaturated carboxylic acids B22211 and linear, branched or cyclic aliphatic alcohols B22212 having at least two hydroxy groups per molecule and from 2 to 8 carbon atoms per molecule, allyl alcohol B2222 or homologues thereof, and ethers B2223 of allyl alcohol and homologues thereof with the alcohols mentioned as B22212, to form an adduct B1B2 in which all remaining isocyanate groups have been reacted to form allophanate groups, the acid groups of the said adduct B1B2 being neutralised with an alkali hydroxide B3 or a reaction product B4 of a diisocyanate B41 and dialkylaminoalcohols B42 and olefinicallyunsaturated alcohols B43 which are selected from the groups B2221 and B2222 and B2223 mentioned supra, or with a mixture of B3 and B4.

The hydroxyalkanoic acid B11 is selected from the same groups as stated under A3.

The olefinically unsaturated isocyanate B12 is a reaction product of a cycloaliphatic or aliphatic linear or branched diisocyanate B21 and a hydroxyl group containing compoundB22. The diisocyanate B21 is selected from the group consisting of the isocyanates mentioned under A3 and diisocyanatoethane, diisocyanatopropane, diisocyanatobutane, diisocyanatohexane, 2,2,4- and 2,4,4-diisocyanatohexane.

The saturated aliphatic linear or branched alcohols B221 having from 6 to 14 carbon atoms are selected from the group consisting of hexanol, 2-ethylhexanol, decyl alcohol, tridecylalcohol and isotridecylalcohol.

The olefinically unsaturated alcohols B222 are selected from the group consisting of esters B2221 of olefinically unsaturated carboxylic acids B22211 and linear, branched or cyclic aliphatic alcohols B22212 having at least two hydroxy groups per molecule and from 2 to 8 carbon atoms per molecule, allyl alcohol B2222 or homologues thereof, and ethers B2223 of allyl alcohol and homologues thereof with the alcohols mentioned as B22212, wherein the esters B2221 are selected from the group consisting of hydroxyethyl acrylate and hydroxyethyl methacrylate, 4-hydroxybutyl (meth)acrylate, 1-methyl-2-hydroxyethyl acrylate and 1-methyl-2-hydroxyethyl methacrylate, 2-hydroxypropyl acrylate and 2-hydroxypropyl methacrylate, and mixtures of these.

The alkali hydroxide B3 can preferably be sodium, potassium or ammonium hydroxide.

The reaction product B4 is based on diisocyanates which are aromatic or preferably aliphatic diisocyanates, wherein the aliphatic diisocyanates are selected from the same group asB21, the dialkylaminoalcohols B42 are preferably N,N-dimethylamino- and N,N-diethylaminoethanol, -propanol or butanol. The olefinically unsaturated alcohols B43 are preferably selected from the group consisting of hydroxyethyl acrylate and hydroxyethyl methacrylate, 4-hydroxybutyl (meth)acrylate, 1-methyl-2-hydroxyethyl acrylate and 1-methyl-2-hydroxyethyl methacrylate, 2-hydroxypropyl acrylate and 2-hydroxypropyl methacrylate, and mixtures of these.

Components A and B are preferably mixed in amounts to yields mass fractions of A and B of from 9 % to 32 %, and from 91 % to 68 %, especially preferred from 12 % to 25 %, and from 88 % to 75%.

The mixtures of the present invention provide coating compositions having good adhesion on conventional solvent based paints, like polyurethane or polyester. Due to the favourable viscosity properties especially in elongational flow, low coating thicknesses of from 2.5 µm to 5 µm of dry film thickness can be realised.

The mixtures of the present invention also provide coating films on metal sheet having high flexibility, i. e. less than 1T in the T-bend test, excellent flexibility as shown by a reverse impact of 5 mm, good deep drawing properties with no delamination of the coating film, as well as high scratch and chemical resistances. They are therefore especially suited for coil coating.

### Examples

### Example 1 and Comparative Example 1

The following paint compositions have been prepared:

### Binder A

A polyester of adipic acid and neopentyl glycol was prepared having a weight average molar mass M_{w} of 670 g/mol, and an average of 2 hydroxyl groups per molecule. This polyester was dissolved in acetone and reacted with isophorone diisocyanate in a quantity corresponding to a ratio of amount of substance of isocyanate groups to the amount of substance of hydroxyl groups in the polyester of 2.0. Dimethylol propionic acid, diethylene glycol and pentaerythritol triacrylate were added, and the reaction was continued until the isocyanate content stated as mass fraction of isocyanate groups with regard to the reaction mass had fallen to below 0.1 %. The resulting mass was dispersed in water to yield an aqueous dispersion of 35 % strength. The content of olefinically unsaturated groups was 0.6 mol/kg.

### Mixture 1

A binder mixture was prepared by adding an aqueous dispersion with a mass fraction of solids. of 50 % of an unsaturated urethane acrylate B having a specific content of olefinic double bonds of 2.7 mol/kg by repeating Example 2 of table 3 of EP 0 694 531, to the aqueous dispersion of Binder A of Example 1. The ratio of masses of solids in the aqueous dispersions of components A and B are 85:15 in this example.

For the purpose of comparison, the aqueous dispersion of component A has been used without addition of component B.

| | Example 1 | Comparative Example 1 |
|---|---|---|
| Component B | 14.4 | |
| Component A | 81.8 | 100 |
| Photoinitiator 1 | 1.4 | 1.4 |
| Additive 2 | 1.0 | 1.0 |
| Additive 3 | 1.0 | |
| Additive 4 | 0.4 | |
| Additive 5 | 0.6 | |

The photoinitiator and additives used were:
- 1: mixture of photoinitiators (1-hydroxycyclohexyl phenyl ketone and benzophenone, ® Irgacure 500, Ciba Specialty Chemicals)
- 2: thickener of the polyethylene glycol derivative type (® Ucecoat XE 430, Surface Specialties S. A., Belgium)
- 3: defoamer additive(® Additol VXW 6396, Surface Specialties Austria GmbH)
- 4: Wetting agent of the silicone type (® Byk 346, Byk Chemie GmbH)
- 5: levelling agent of the silicone type (® Additol VXL. 4930, Surface Specialties Austria GmbH)

The paints of Example 1 and of the Comparative Example have been applied to a metal coil where a primer layer and a topcoat layer had previously been applied, at a line speed of from 8 m/min to 10 m/min, and irradiated after flashing off the water for three minutes at 60 °C with a high pressure mercury lamp having a power output of 120 W/cm.

Samples of the coil treated according to the invention (Example 1) and with a paint of the comparison example have been subjected to mechanical testing.

The following properties were found for both samples:

| | |
|---|---|
| Adhesion: | GT 0 |
| Solvent resistance: | > 100 double rubs (MEK) |
| T-Bend: | < 1T |
| Erichsen indentation test: | > 8 mm |

The following results have been obtained with regard to the application behaviour:

| | Paint of the Comparison Example | Paint of Example 1 |
|---|---|---|
| Drying | physically drying; after film is applied and water is evaporated, insufficient levelling | good levelling after water evaporation |
| Roller Application | paint is prone to stick to roller: material which adheres to roller is not reemulsified by new paint | less sticking to roller, good transfer to the substrate |
| Addition of Additives | difficult due to low viscosity | increase in viscosity due to addition of component B facilitates admixing of additives |
| Adhesion | both systems have similar adhesion properties; no adverse effect due to addition of component B | |
| Mechanics | both systems have similar mechanical properties; no adverse effect due to addition of component B | |
| Solvent Resistance | both systems have similar solvent resistance properties; no adverse effect due to addition of component B | |

In summary, addition of component B improves the applicability while the favourable properties of component A are retained

## Claims

1. A coating composition wherein the binder comprises a mixture of mass fractions of from 60 % to 94 % of an aqueous dispersion of a UV curable purely aliphatic polyurethane A based on an aliphatic polyester A1 of low molar mass (M_{w}, between 400 g/mol and 1 kg/mol), a cycloaliphatic diisocyanate A2, a hydroxy alkanoic acid A3, and a mixture of a diol A4 and a partial ester A5 of a olefinically unsaturated carboxylic acid A51 and a polyol A52 having at least one free hydroxyl group per molecule, and
from 6 % to 39 % of an olefinically unsaturated urethane component B having a specific content of olefinic double bonds of from 1.5 mol/kg to 3.5 mol/kg.

2. The coating composition of claim 1 wherein the content of olefinic unsaturation in A is from 0.05 mol/kg to 5 mol/kg.

3. The coating composition of claim 1 wherein in the formation of polyurethane A, the ratio of the amount of substance of isocyanate groups in the diisocyanate A2 to the amount of substance of hydroxyl groups in the aliphatic polyester A1 is from 2.7 mol/mol to 2.2 mol/mol.

4. The coating composition of claim 1, wherein the aliphatic polyester A1 is derived from aliphatic acids A11 which are linear, and from aliphatic alcoholsA12 which are branched.

5. The coating composition of claim 1 wherein component B is a reaction product of a compound B1 formed from a hydroxyalkanoic B11 acid having at least two hydroxyl groups per molecule and at least one acid group per molecule, with an olefinically unsaturated isocyanate B12 having from 0.8 to 1.2 isocyanate groups per molecule, and at least one urethane group per molecule, and a further isocyanate B2 having from 0.8 to 1.2 isocyanate groups per molecule which is in turn the reaction product of a cycloaliphatic or aliphatic linear or branched diisocyanate B21 having from 4 to 12 carbon atoms per molecule, and a hydroxyl group containing compound B22 selected from the group consisting of saturated aliphatic linear or branched alcohols B221 having from 6 to 14 carbon atoms and olefinically unsaturated alcohols B222 selected from the group consisting of esters B2221 of olefinically unsaturated carboxylic acids B22211 and linear, branched or cyclic aliphatic alcohols B22212 having at least two hydroxy groups per molecule and from 2 to 8 carbon atoms per molecule, allyl alcohol B2222 or homologues thereof, and ethers B2223 of allyl-alcohol and homologues thereof with the alcohols mentioned as B22212, to form an adduct B1B2 in which all remaining isocyanate groups have been reacted to form allophanate groups, the acid groups of the said adduct B1B2 being neutralised with an alkali hydroxide B3 or a reaction product B4 of a diisocyanate B4-1 and dialkylaminoalcohols B42 and olefinically unsaturated alcohols B43 which are selected from the groups B2221 and B2222 and B2223 mentioned supra, or with a mixture of B3 and B4.
